# EUROPEAN PATENT SPECIFICATION

(11) **EP 0 963 904 B1**
(45) Date of publication and mention of the grant of the patent: **29.10.2003**
(21) Application number: 98201938.2
(22) Date of filing: 10.06.1998
(51) Int. Cl.: B62D 65/00

(54) **Transport system with suspended load and lifting and lowering devices on board**
Transporteinrichtung mit hängenden Lasten und Hebe- und Senkvorrichtung an Bord
Système de transport avec charge suspendue et dispositif pour soulever et abaisser à bord

(43) Date of publication of application: 15.12.1999
(73) Proprietor: Lopez Alba, Adelardo, 08960 San Just Desvern (ES)
(72) Inventor: Lopez Alba, Adelardo, 08960 San Just Desvern (ES)
(74) Representative: Maldonado Jordan, Julia

(56) References cited:
- DE-A- 4 326 563
- DE-U- 9 416 172
- "VEHICLE ASSEMBLY APPARATUS" RESEARCH DISCLOSURE, no. 333, 1 January 1992, pages 56-58 1 - 02, XP000281161

## Description

### PURPOSE OF THE INVENTION

This transport system with suspended load and lifting and lowering devices on board, consists of a mounted motorised carriage which can move on an elevated horizontal guide rail, an upper suspended frame of the carriage, a lower support to grip the load, and elevation systems which, apart from connecting the lower support with the upper frame, enable it to be placed at the required height together with the load, at different stretches of the run.

### BACKGROUND OF THE INVENTION

The transport systems with suspended load, used particularly in assembly lines, consist of a guide rail on which a motorised carriage is mounted from which a chassis suspends at a set height and used to support the load to be transported.

In these assembly lines, there are different working zones and it is required that the load is placed at a certain height in each of these zones to enable the operators to work correctly. This is achieved by moving the carriage on elevated guide rails which run in horizontal stretches at different heights, and sloping interlink stretches.

To move the carriage on the sloping stretches of the guide rail causes serious traction problems with the possibility of the drive wheels slipping, making it difficult to go along these stretches, especially when heavy loads are being transported.

If the dimensions of the load vary, the guide rails have to be modified so that the load passes through different working zones at set heights.

### DESCRIPTION OF THE INVENTION

The transport system of this invention includes mounting the motorised carriage on an elevated guide rail, which is different as it is horizontal throughout the run, without any sloping stretches. The motorised carriage moves on the horizontal guide rail and carries a system to support the load and systems to adjust the height in the various working zones.

The system is controlled by a programmable robot which sets the position ofthe carriage at all times and enables the height of the load to be adjusted in the various working zones, depending on the dimensions of the load and the type of work being performed by the operators in each of these zones.

The advantages of this system are: the elimination of sloping stretches in the elevated guide rail, thereby eliminating traction problems, the possibility of adjusting the load height without the need to change or modify the elevated guide rail and the possibility of resetting the course of the load at different stretches of the run, by means of the robot.

### DESCRIPTION OF THE DIAGRAMS

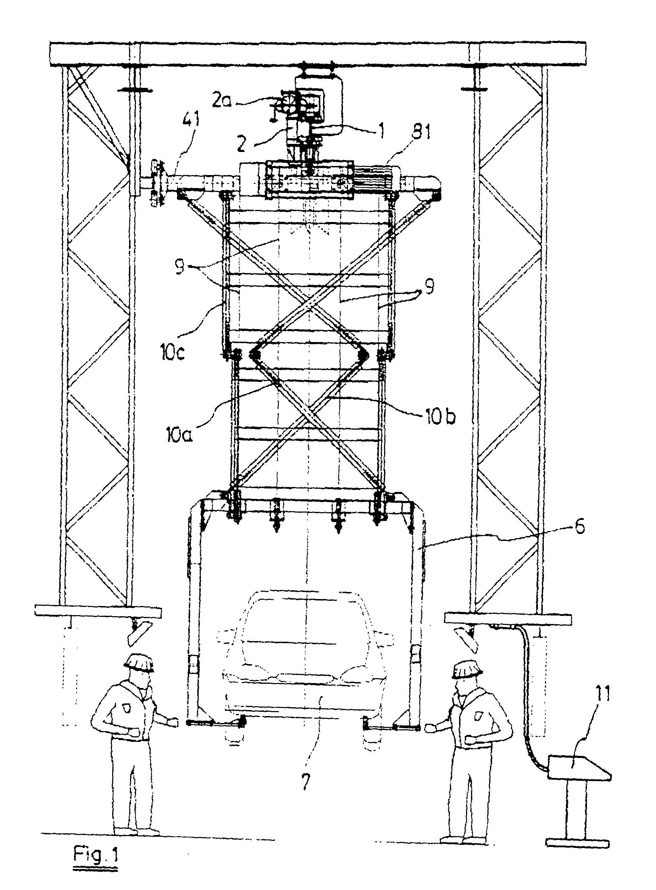

- Figure 1 shows a front view of a vehicle assembly line with the transport system of the invention.

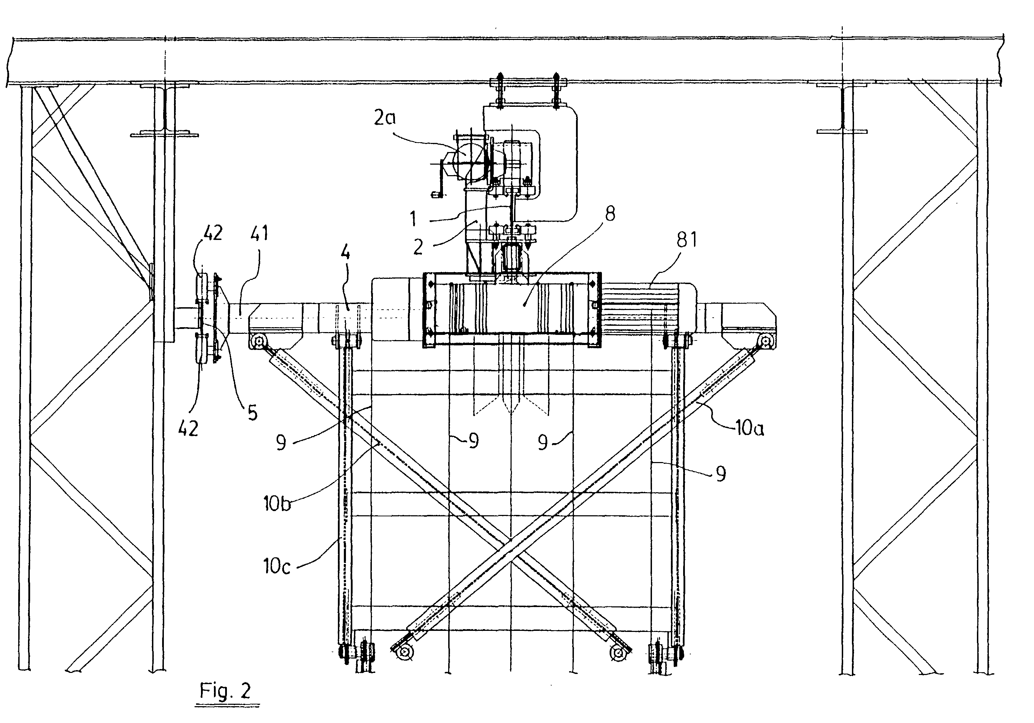

- Figure 2 shows details, in a larger scale, of the upper section of the transport system given in the previous figure.

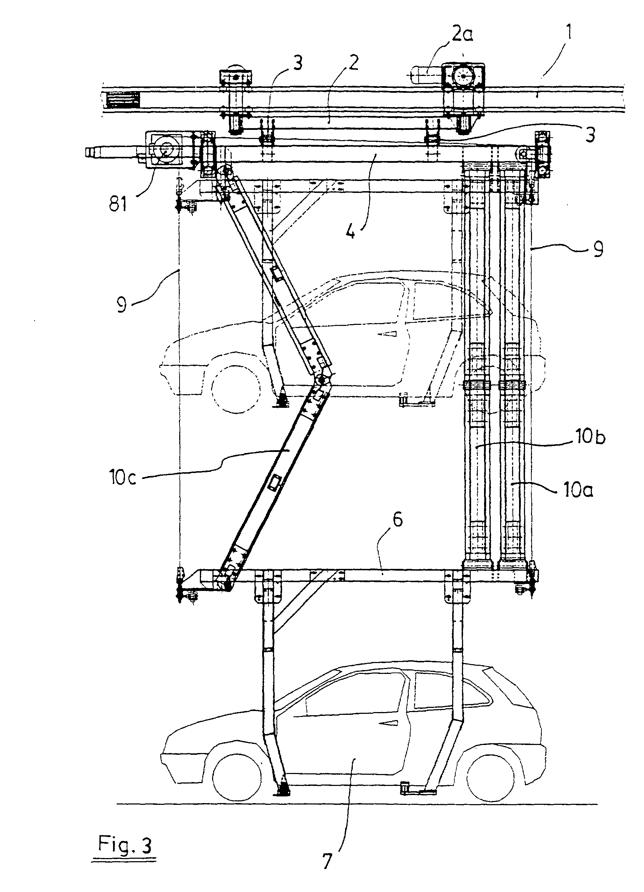

Figure 3 shows an side view of the transport system, showing the load in the lower position and in an elevated position.

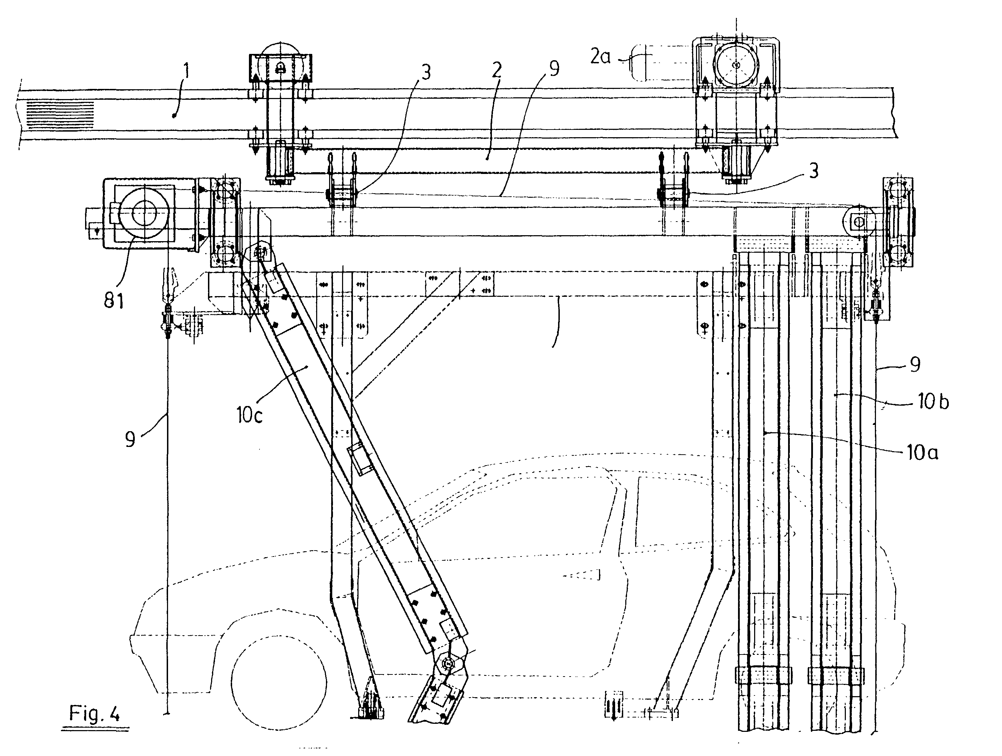

Figure 4 shows details, in a larger scale, of the upper section of the transport system given in the previous figure.

### PREFERENTIAL MANUFACTURE OF THE INVENTION

DE 43 26 563 A refers to a transport system with suspended load including all the features of the preamble of claim 1.

In the article VEHICLE ASSEMBLY APPARATUS RESEARCH DISCLOSURE, NO 333, 1 JANUARY 1992, PAGES 56-58 1-02, XP000281161 a system to suspend a load is disclosed comprising an upper frame and a lower support connected by scissoring mechanisms and having associated a load elevation system consisting of a rotating drum mounted on said frame and a motor which rotates the drum to wind or unwind a cable which hold a load.

The invention is defined by claim 1.

This transport system consists of a longitudinal guide rail (1) placed on a horizontal plane, on which a motorised carriage (2) is mounted with the possibility of moving and from which an upper frame (4) suspends by means of shafts (3).

The frame (4) has a side arm (41) provided with wheels (42) which act with a small clearance on a stabilising guide rail (5) parallel to the upper guide rail (1). This stabilising guide rail (5) is only installed in zones where the load has to be handled.

A device is fixed to the frame (4) to elevate the lower support (6) used to hold the load (7) which is to be transported, which in this example is represented by the chassis of a vehicle. The elevation system of the support (6) consists of a drum (8) which turns in both directions by a servomotor (81). Depending on the turn direction of the motor (81) steel cables (9) are wound or unwound round the drum (8). These cables hold the lower support (6) thereby lifting or lowering the support (6) and therefore the load (7) which is placed on the support.

The lower support (6) is connected to the upper frame (4) by scissoring mechanisms, also called pantographic mechanisms, (10a), (10b) and (10c) which allow the lower support (6) to vertically move with respect to the frame (4).

The scissoring mechanisms (10a) and (10b) are placed in opposite positions and work on parallel planes, while the scissoring mechanism (10c) works on a plane perpendicular to the two previous ones.

This lay-out of the scissoring mechanisms(10a), (10b) and (10c) stops the lower support (6) from swinging with respect to the upper frame (4).

The motor (2a) used to longitudinally move the carriage (2) and the motor (81) used to operate the drum (8) will be furnished with encoders, allowing the position to be controlled at all times, by means of a programmable robot (11). This robot can also programme changes in height of the support (6) and therefore the load to be transported (7) at the different points of work defined along the assembly line.

## Claims

1. Transport system with suspended load and lifting and lowering devices on board comprising an elevated guide rail (1) which is totally horizontal, a motorised carriage (2) which moves longitudinally along said guide rail (1), a system to suspend a load (7) from said motorised carriage (2) and a system to adjust the height of the load (7) at different stretches of the run, the system being controlled in position by a programmable robot which can also programme changes in the height of a lower support (6) *used* to *hold the load (7) and* connected to an upper frame (4) of the transport system **characterised in that** the upper frame (4) has a side arm (41) provided with wheels (42) which acts with a small clearance on a stabilising guide rail (5).

2. Transport system according to claim 1 **characterised in that** said stabilising guide rail (5) is only installed in zones where the load has to be handled.

3. Transport system according to claim 1 or 2 **characterised in that** said stabilising guide rail (5) is parallel to the upper guide rail (1).

4. Transport system according to the claim 2 **characterised in that** the upper frame (4) and the lower support (6) are connected by scissoring mechanisms (10a, 10b, 10c) which enable the lower support (6) to be lifted and lowered with respect to the upper frame (4) and **in that** said scissoring mechanism (10c and 10a) are placed on perpendicular planes to stop the support (6) from swinging with respect to the frame (4).

5. Transport system according to the claim 4, **characterised in that** mounted on said upper frame (4) is a load elevation system consisting of a rotating drum (8) and a motor (81) that rotates the drum (8) in both directions and winds or unwinds cables ( 9), which hold the lower support (6).

## Patentansprüche

1. Transportsystem mit Hängeladung und eingebauten Hub- und Absenkvorrichtungen. Es umfasst folgendes: eine oben montierte Führungsschiene (1), die vollkommen waagrecht verläuft, ein motorisiertes Laufwerk (2), das sich in Längsrichtung entlang der Führungsschiene (1) bewegt, ein System zum Aufhängen einer Ladung (7) an dem motorisierten Laufwerk (2) sowie ein System zum Einstellen der Höhe der Ladung (7) an verschiedenen Abschnitten der Strecke. Das System wird dabei durch einen programmierbaren Roboter positionsgesteuert, der außerdem Änderungen in der Höhe einer unteren Auflage (6) programmieren kann, die zum Festhalten der Ladung (7) benutzt wird. Dieser Roboter ist mit einem oben angebrachten Rahmen (4) des Transportsystems verbunden. Dieser obere Rahmen (4) ist **dadurch gekennzeichnet, dass** er einen Seitenarm (41) aufweist, der mit Rädern (42) versehen ist, und mit gering angesetztem Spiel auf eine stabilisierende Führungsschiene (5) einwirkt.

2. Transportsystem gemäß Anspruch 1, **dadurch gekennzeichnet, dass** die stabilisierende Führungsschiene (5) nur in Arbeitsbereichen eingerichtet wird, in denen die Ladung gehandhabt werden muß.

3. Transportsystem gemäß Ansprüchen 1 oder 2. Dieses ist **dadurch gekennzeichnet, dass** die stabilisierende Führungsschiene (5) parallel zu der oberen Führungsschiene (1) verläuft.

4. Transportsystem gemäß Anspruch 2, **dadurch gekennzeichnet, dass** der obere Rahmen (4) und die untere Auflage (6) durch scherenförmige Mechanismen (10a, 10b, 10c) verbunden sind, die es ermöglichen, die untere Auflage (6) in Bezug auf den oberen Rahmen (4) anzuheben und abzusenken, und dass die Scherenmechanismen (10c und 10a) in lotrechten Ebenen angeordnet sind, um die Auflage (6) davon abzuhalten, in Bezug auf den Rahmen (4) zu schwingen.

5. Transportsystem gemäß Anspruch 4, **dadurch gekennzeichnet, dass** auf dem oberen Rahmen (4) ein Aufzugsystem für Ladungen befestigt ist, das eine Drehtrommel (8) und einen Motor (81) umfasst, welcher die Trommel (8) in beide Richtungen dreht und die Kabel (9), welche die untere Auflage (6) halten, auf- oder abwickelt.

## Revendications

1. Système de transport avec charges suspendues et dispositifs de relevage et de descente intégrés comprenant un rail de guidage supérieur (1) entièrement horizontal, un chariot motorisé (2) qui se déplace longitudinalement le long du rail de guidage (1), un système pour l'accrochage d'une charge (7) au chariot motorisé (2) et un système pour le réglage de la hauteur de la charge (7) à différentes étapes de l'exécution, le système étant contrôlé en position par un robot programmable, lequel peut également programmer des modifications de hauteur d'un support inférieur (6) utilisé pour maintenir la charge (7) et relié à un châssis supérieur (4) du système de transport **caractérisé par** un bras latéral (41) équipé de roues (42) qui agissent avec un faible jeu sur un rail de guidage de stabilisation (5).

2. Système de transport conforme à la revendication 1, **caractérisé en ce que** le rail de guidage de stabilisation (5) est exclusivement installé dans les zones requérant la manipulation de la charge.

3. Système de transport conforme à l'une des revendications 1 ou 2, **caractérisé en ce que** le rail de guidage de stabilisation (5) est parallèle au rail de guidage supérieur (1).

4. Système de transport conforme à la revendication 2, **caractérisé en ce que** le châssis supérieur (4) et le support inférieur (6) sont reliés par des mécanismes de cisaillement (10a, 10b, 10c) qui permettent le relevage et la descente du support inférieur (6) par rapport au châssis supérieur (4), et **en ce que** les mécanismes de cisaillement (10c et 10a) sont placés sur des plans perpendiculaires pour arrêter l'oscillation du support (6) par rapport au châssis (4).

5. Système de transport conformes à la revendication 4, **caractérisé par** un système de levage de charge monté sur le châssis supérieur (4), ce système consistant en un tambour rotatif (8) entraîné en rotation dans les deux sens par un moteur (81) et en des câbles à enrouler et dérouler (9), qui maintiennent le support inférieur (6).
